# EUROPEAN PATENT SPECIFICATION

(11) **EP 3 929 480 B1**
(45) Date of publication and mention of the grant of the patent: **15.05.2024**
(21) Application number: 20182124.6
(22) Date of filing: 25.06.2020
(51) Int. Cl.: F16L 19/065, F16L 19/075, F16L 19/08, F16L 47/04, F16L 37/244

(54) **CONNECTION SYSTEM FOR PIPES**
VERBINDUNGSSYSTEM FÜR ROHRE
SYSTÈME DE CONNEXION POUR TUYAUX

(43) Date of publication of application: 29.12.2021
(73) Proprietor: Elysee Irrigation Ltd, Nicosia (CY)
(72) Inventor: Protopapas, Panos, Nicosia (CY)
(74) Representative: Müller Schupfner & Partner Patent- und Rechtsanwaltspartnerschaft mbB (Muc)

(56) References cited:
- EP-A1- 1 108 176
- EP-A1- 1 380 788
- EP-A1- 1 848 912
- WO-A2-2020/016895
- US-A1- 2004 245 779

## Description

The present invention relates to a connection system, in particular, for connecting irrigation pipes with each other or to water supply systems.

Several connection systems and techniques have been used in the past, which allow the connection pipes, in particular made of plastic material, wherein either tools have to be used for fastening the connection of the pipes and providing a sufficient sealing or the connection systems may be fastened and sealed manually, wherein at least screwed fastening connectors have become the standard way of connecting pipes and hoses. Document EP1848912A1 discloses for example such connection system. However, the connection systems known in the prior art are often complicated to assemble, require extensive manual work or tools for achieving the sufficient sealing and fastening conditions and usually allow only for a certain type of pipes to be connected to the connection system.

Accordingly, there is a need for providing a connection system for pipes and hoses, which eases the assembly and accelerates and optimizes the connection process. Furthermore, it is an object of the present invention to provide a connection system, which allows for the connection of different pipes without complicated adapter solutions.

The invention is defined by a connection system for pipes according to the technical features of independent claim 1. Advantageous embodiments of the invention are defined in the dependent claims.

The basic parts of the connection system are a core, which is preferably made of plastic material, hollow-shaped and adapted to serve as adapter between a pipe and another parts of an irrigation system. The nut is a ring- and hollow-shaped part, which is adapted to be drawn over the core and in one particular preferred embodiment adapted to be screwed onto the core. Arranged in the space that is defined by the inner volume of the nut and the inner volume of the core, a gripping element and a sealing element are arranged. It is to be understood that additional elements, like for instance an intermediate element, may be arranged in the inner space defined by the nut and the core. The gripping element is an at least partially ring-shaped part, which is adapted for elastic deformation. In particular, the gripping element is adapted to hold a pipe inserted in the connection system. To ease the insertion of a pipe into the connection system, the connection system may be brought into a first state, where the nut and the core remain movable relative to each other in a direction parallel to the longitudinal axis and the gripping element remains in a relaxed state, in which its inner geometry defines a bore with a maximum mean insertion diameter. In a first preferred embodiment, where the nut is screwed onto the core by a rotational movement, the first state is preferably defined by a loose engagement of the holding means at the nut and the core, which allows the rotation and according longitudinal displacement of the nut relative to the core. In an alternatively preferred embodiment, the holding means at the nut and the core are shaped such that they are out of engagement in the first state, such that the nut and the core are displaceable in longitudinal direction relative to each other without any rotational movement. The first state allows the insertion of pipes, preferably plastic pipes, without the need of tools or extensive manual forces. After insertion of the pipe, the connection system is adapted to be brought to a second state, wherein holding means, which can be formed as thread or as teeth or protrusions, secure the core and the nut in a certain position in longitudinal direction relative to each other. In a preferred embodiment of the holding means being formed as threads, the second state can be achieved by securing the nut and the core from rotational movements relative to each other, such that also longitudinal movement of the two parts is prevented. Furthermore, in the second state the gripping element, which consists of elastic, resiliently deformable material, is deformed by a compression surface of the nut and a corresponding counter force exerted by the core, whereby the inner bore of the gripping element is reduced to a mean gripping diameter. Mean gripping diameter means that the diameter of the bore defined by the inner surface of the gripping element is reduced to such extend that the gripping element is force-fit and frictionally engaged with the pipe. In a preferred embodiment, the gripping element comprises teeth at its inner surface such that when the connection system is in the second state, the teeth of the gripping element penetrate the outer surface of the pipe such that not only a force- and friction- fit holds the pipe but also a positive fit between the gripping element and the pipe serves to secure the pipe in its connected position. With these teeth, the gripping element is in particular adapted to fasten pipes of plastic material, which is deformable by the teeth. The force deforming the gripping element is thereby exerted by an inner surface of the nut and the respective counter force originates from the core. In particular, the nut is moved relative to the core, parallel to the longitudinal axis. While the nut presses the gripping element against the core, the gripping element is supported by at least one of a sealing, an intermediate element or directly at the core at a gripping shoulder formed at the core. Each of the additional elements are supported by the core, such that the compressing force for compressing the gripping element results from a force provided by the engagement of the holding elements formed at the nut and the core. With this simple and sustainable method for fastening a pipe in the connection system, it is very easy to insert the pipe to the connection system and in the same time very easy to provide the respective holding force acting on the pipe to secure the pipe in the connection system.

Preferably, the first holding means and the second holding means comprises at least one protrusion at the inner side of the nut and the outer side of the core, wherein each protrusion extends mainly along a circumferential circular arc of a circle around the longitudinal axis. An extension mainly along a circumferential circular arc of a circle around the longitudinal axis means that a certain pitch of the holding means is preferably within the scope of the present invention. In particular, the holding means may form a thread. It is also possible that the protrusions extend exactly along a circle around the longitudinal axis. In this embodiment, rotation of the nut relative to the core does not displace the nut relative to the core in the longitudinal direction. However, in other embodiments it is preferred that by rotating the nut relative to the core, a certain transversal movement of the nut relative to the core may be achieved to adjust the longitudinal position of the nut relative to the core and, thereby, the resulting compression of the gripping element.

In a preferred embodiment, the compression surface of the nut and a corresponding outer gripping surface formed at the gripping element are formed conically, the conical form of the respective compression surface and the outer gripping surface at the gripping element allow the transformation of a longitudinal movement parallel to the longitudinal axis in a radio movement that compresses the gripping element to reduce the inner diameter of the gripping element and engage a pipe connected to the connection system. Of course, in other preferred embodiments, the slope, in particular of the compression surface of the nut may vary along the longitudinal axis, in particular to allow for a stronger reduction of the inner diameter of the gripping element in a first stage of the process of fastening the connection system and slow down the decrease of the inner diameter, when the maximum deflection of the gripping element is reached. A conical shape of the compression surface and the outer gripping surface has the advantage of cheap and fast production of the respective parts. Alternatively preferred, the nut comprises a radially extending compression surface, wherein the conically formed surface, which engages at the conically shaped surface of the gripping element, is formed at the inner side of the core or at the inner side of an intermediate element. Preferably, the gripping shoulder of the core comprises the conically formed inner surface, while the compression surface of the nut extends only or mainly in a radial direction. Preferably, the gripping element comprises a mainly ring-shaped section and comprises at least one gripping gap that extends in the circumferential direction and interrupts the outer gripping surface. The gripping gap is thereby in particular one space that forms a recess in the gripping surface and allows the compression of the gripping element in such manner that the gap between the gripping surfaces is reduced in the course of the compression. In one particular preferred embodiment, the gripping element is formed as split ring. In another preferred embodiment, the gripping element comprises a completely ring-shaped section from which at least two projections, which comprise the outer gripping surfaces, extend, wherein at least two respective gripping gaps are defined between the protrusions. In case of the split ring, the gripping element is regarded to be ring-shaped, even though there is a gap such ring. In a preferred embodiment of the gripping element formed as split ring a bridging protrusion, which extends along the circumferential direction is formed to provide an almost complete ring-shaped outer surface of the gripping element formed as split ring. This bridging protrusion is adapted to engage in a respective recess formed at the other end of the split ring.

According to the invention, the nut comprises at least one nut locking protrusion extending parallel to the longitudinal axis and/or radially inwardly from the rear rim of the nut and the core comprises at least one core locking protrusion extending radially outwardly from the core, wherein in the first state and/or in the second state of the connection system, the core locking protrusion and the nut locking protrusion engage with each other to prevent rotational movements of the nut relative to the core in one rotational direction. The locking protrusions at the nut and the core serve to secure the nut and the core in certain rotary positions in this regard is preferred that not only one core locking protrusion is formed at the core, but a plurality of core locking protrusions allow the securing of different rotary positions of the nut relative to the core. This preferably allows a first rotary position, wherein the connection system is in its first state. Since the nut locking protrusion and the core locking protrusion are resiliently deformable, they form obstacles that can be overcome by manual force such that the nut can be further rotated relative to the core after the elastic holding force of the locking protrusions is overcome. In this regard, the locking protrusions are adapted to prevent unwanted rotation of the nut relative to the core, while intentional rotation of the nut relative to the core caused by manual forces of a user of the connection system is possible when overcoming the holding force of the engagement of the locking protrusions.

In a preferred embodiment, the first holding means and the second holding means are threads adapted to screw the nut onto the core. In this preferred embodiment, the holding means at the nut and the core are continuous threads without interruptions that serve to continuously screw the nut onto the core and thereby move the nut relative to the core along the longitudinal axis. In this embodiment, the rotational movement of the nut results in a constant longitudinal movement of the nut relative to the core, whereby the gripping element is compressed continuously by the compression surface of the nut.

Preferably, the nut in a second state of the connection system is adapted to exert the force acting parallel to the longitudinal axis that presses the gripping element and/or the intermediate element against the sealing, wherein the sealing is supported by the sealing shoulder formed at the inner side of the core, which holds the sealing against the pressing force exerted by the nut, wherein the sealing is deformed such that an inner sealing diameter is reduced. In this embodiment, the force exerted by the nut does not only compress the gripping element, but also results in a force parallel to the longitudinal axis that compresses the sealing and deforms the sealing in such manner, that the inner diameter of the sealing is reduced. By reducing the inner sealing diameter, the sealing gaps enclose a sealed engagement with the pipe. Thereby, the pipe is held by the gripping force exerted by the gripping element and is sealed the surface pressure exerted by the seal on the pipe. By reducing not only the inner diameter of the gripping element, but also the inner diameter of the sealing, the connection system is adapted to connect, hold and seal pipes of different outer diameters. In this regard, it is possible to connect pipes with an outer diameter ranging from 10 mm to 100 mm, preferably from 15 mm to 80 mm, and in one particularly preferred embodiment pipes with outer diameters of 16 mm to 63 mm with the connection system. This allows in particular the connection of pipes, which are designed in the metric system and in the same time pipes, which are designed according to the imperial system. The connection system is thereby adapted to compensate for a difference of outer pipe diameters in a range of at least 16 mm to 63 mm, whereby the gripping element and the sealing are adapted to provide the same holding and sealing conditions for each pipe within this range of outer diameters.

Preferably, the core comprises a plurality of core locking protrusions that are distributed along the outer circumference of the core, wherein a rotation of the nut relative to the core about the longitudinal axis, starting from a zero position at a first state angle about a second state angle results in one of a plurality of second states of the connecting system, wherein each nut locking protrusion engages with one core locking protrusion to hold the connection system in one of the second states. As described before, the connection system is preferably adapted to connect and seal pipes of different outer diameters. Therefore, it is advantageous to provide several core locking protrusions distributed along the outer circumference of the core, wherein each locking protrusion becomes active for a certain outer pipe diameter and secures the nut in a certain rotary position relative to the core. The respective certain rotary position involves a certain state of compression of the gripping element and the sealing to connect and seal a pipe of a certain outer diameter. In this regard, the connection system may not only be set to one certain second state, but there are several second states. As an example, a rotation of the nut relative to the core about 180° may result in a second state to fasten a two-inch pipe, while further rotation of the nut about another 90° will result in another second state to connect a 50 mm outer diameter pipe. In each of these second states, the nut locking protrusion engages with one core locking protrusion to prevent unintended rotation of the nut relative to the core and to signal the user of the connection system that a certain rotary positon is reached and over compression or destruction of the outer pipe geometry or the sealing or other parts of the connection system may be prevented.

In a preferred embodiment, the sealing is ring-shaped and comprises two substantially plain side faces and a deformation section arranged between the side faces, wherein the deformation section has a convex side facing towards the inner side of the sealing. The sealing has in other words a D-form or a C-form, which improves the transformation of longitudinal compression of the sealing to a reduction of the inner diameter of the sealing. The convex side of the deformation section engages the pipe and provides a close seal. The substantially plain side faces of the sealing are adapted to receive the compressing forces exerted by the nut (via the gripping element and/or the intermediate element) and the sealing shoulder of the core and to transfer these compression forces in a radial extension of the sealing cross section.

Furthermore preferred, the deformation section of the sealing comprises a deformation recess facing towards the outer side of the sealing. The deformation recess has the further advantage of improving the process of reducing the inner diameter of the sealing, where a certain compression force acts on the plain side faces. Thereby, the plain side faces support the sealing also in the radial direction and rest against the inner surface of the core. The deformation recess may thereby have a substantially W-shaped cross section, which results in the deformation of the sealing towards its inner side and thereby reducing the inner diameter of the sealing about several millimeters already when longitudinal compression of the sealing element is only one or two millimeters.

Preferably, the first holding means and the second holding means extend along circumferential circular arcs with an arc angle of less than or equal to 90°, wherein two first holding means and two second holding means are arranged at opposing sides of each of the core and the nut, wherein each space between the holding means is free of protrusions. In this preferred embodiment, the core and the nut are in a certain rotary position relative to each other free to be moved parallel to the longitudinal direction relative to each other. When rotating the nut relative to the core about 90°, the first and second holding means are in complete engagement with each other, such that further longitudinal movements of the nut and the core are prevented by the holding means. This preferred embodiment allows for quick inserting of the core in the nut without the necessity of evolving movements of the nut around the core. When the wanted longitudinal position of the nut relative to the core is reached, the user can very easily rotate the nut only about 90° to bring the holding means into full engagement with each other, wherein the longitudinal position of the nut and the core is secured. In the preferred case of core locking protrusion and nut locking protrusion formed at the nut and the core, the connection system can be secured in this certain rotary position.

Preferably, the nut comprises at least two compression surfaces arranged opposing each other at the inner side of the nut, wherein the nut comprises inserting surfaces arranged at the inner side of the nut between the compressional surfaces, wherein the inserting surfaces extend substantially cylindrically along the longitudinal axis, wherein the minimum distance between the compression surfaces is smaller than the minimum distance between the inserting surfaces. The nut has preferably only two separate surfaces, which are in a preferred embodiment conically shaped. Between the two compression surfaces, the nut comprises inserting surfaces, which do not have the conical shape, but extend substantially cylindrically. The inserting surfaces are adapted to allow the insertion of the pipe, while the gripping element in its relaxed state does not exert any holding force on the pipe. First, when the nut is rotated about 90° relative to the core and relative to the gripping element, which is secured against rotation relative to the core, the compression surfaces get in contact with the outer gripping surfaces of the gripping element to reduce the inner diameter of the gripping element and bring the gripping element into engagement with the pipe. In a furthermore preferred embodiment, the nut comprises two compression surfaces with a first minimum inner diameter and adjacent to each of these compression surfaces additional compression surfaces with a second minimum inner diameter, which is smaller than the first minimum inner diameter. Starting from the first state, the gripping surfaces are firstly arranged at the insertion surfaces. When rotating the nut relative to the core about a first rotation angle, the gripping surfaces become compressed by a first pair of compression surfaces to bring the gripping element and the connection system in a second state. Further rotation of the nut brings the gripping surfaces in contact with the next pair of compression surfaces, which compress the gripping element even more and reduces its inner diameter to allow for the connection of a pipe of smaller outer diameter. A third and a fourth pair of compression surfaces may be arranged at the inner side of the nut, to allow for a controllable compression of the gripping element, depending of the rotational position of the nut relative to the core and the gripping element.

Preferably, the minimum distance between the compression surfaces is between 0.4 to 0.9-times, preferably between 0.5 to 0.8-times and, in particular, preferably between 0.6 to 0.8-times the minimum distance between the inserting surfaces. With the preferred ratio of 0.4 to 0.9-times of the minimum distance between the compression surfaces and the minimum distance between the inserting surfaces, the inserting surfaces leave enough space to insert pipes very easily and without extensive manual forces. In the same time, the compression surfaces are much closer to each other, such that the gripping element is compressed sufficiently, when the nut is rotated relative to the core and the gripping element to secure the pipe firmly in the connection system.

Furthermore preferred, the gripping element comprises at least one securing protrusion or a securing recess, which can be brought in direct or indirect engagement with a supporting protrusion or supporting recess formed at the inner side of the core to prevent rotation of the gripping element relative to the core, wherein the supporting protrusion/ recess preferably comprises the gripping shoulder. In a first preferred embodiment, the gripping element is directly secured at the core against rotation and, in particular preferred against longitudinal movements in one direction parallel to the longitudinal axis. Therefore, the gripping element comprises a securing geometry, which may be formed as protrusion or recess and is adapted to engage with a correspondingly shaped supporting recess formed at the inner side of the core. Thereby, the gripping element is not only supported in a longitudinal direction, but is also prevented from rotary movements relative to the core.

In another preferred embodiment, the securing protrusion or securing recess of the gripping element engages a corresponding recess or protrusion formed at an intermediate element, wherein the intermediate element comprises an intermediate protrusion or intermediate recess, which can be brought in direct engagement with the supporting protrusion or supporting recess at the core. In particular to reduce the complexity of the parts of the connection system involved, it is preferred to arrange an intermediate element between the gripping element and the core. Thereby, the intermediate element is secured against longitudinal movements and rotation relative to the core and comprises intermediate protrusions or intermediate recesses, which secure the gripping element against rotation and longitudinal movement in one direction relative to the intermediate element. Thereby, the intermediate element may serve to hold the sealing in its position inside the core during the assembly process of the connection system. Furthermore, the gripping element may be formed of a material of greater flexible deformability than an intermediate element, which may be formed of rigid material to increase the life cycle of the connection system.

Further preferred embodiments and additional features of the present invention are described in the following description with reference to the attached figures.

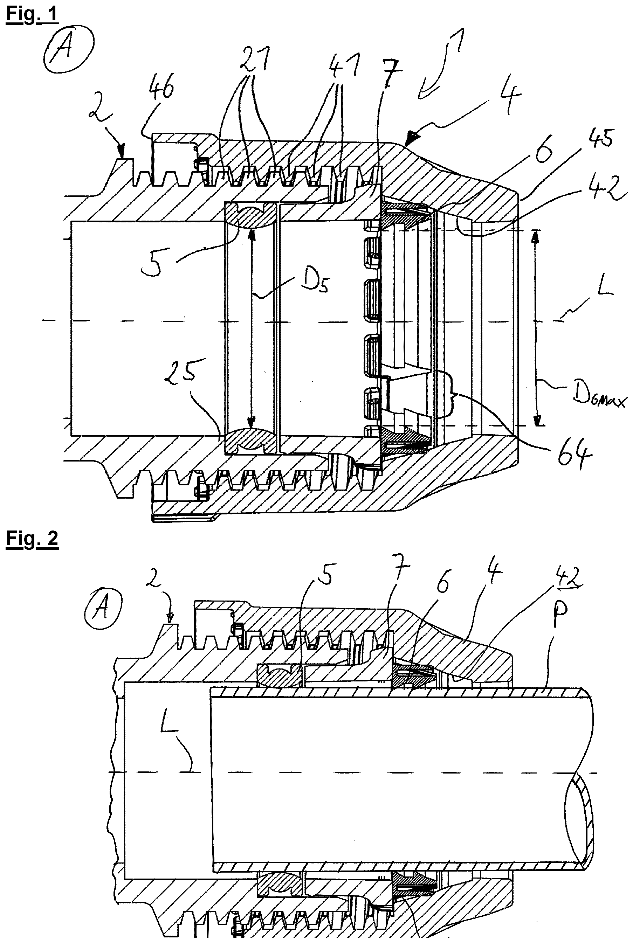

Figure 1 shows a cross section of a preferred embodiment of the present invention, wherein the connection system 1 is in its first state A. In the first state, the core 2 is preferably already inserted into the nut 4, wherein preferably the first holding means 21 and the second holding means 41 are formed as threads, which allow for screwing the nut 4 onto the core 2. Respectively, in the first state A shown in figure 1, the nut 4 has already been rotated relative to the core 2 and has been screwed on the core 2. However, in the first state A, the gripping element 6 is not compressed by the compression surface 42 of the nut 4 and the gripping gap 64 has its maximum extension along the circumference of the gripping element 6. In this state, the gripping element 6 defines an inner bore with a maximum mean insertion diameter D₆ₘₐₓ. This inner diameter D₆ₘₐₓ of the gripping element 6 allows the insertion of a pipe (see figure 2). Furthermore, an intermediate element 7 is arranged between the nut 4 and a sealing 5. In the first state of the connection system 1, the sealing is not compressed by the force exerted by the nut 4 in the direction parallel to the longitudinal axis L as is visible in figure 1 by the small gap between the intermediate element 7 and the sealing 5. The sealing 5 is placed in a respective recess formed at the core 2 and is supported by a sealing shoulder 25. As well as the gripping element 6, the sealing 5 is not compressed in a first state A of the connection system 1 and, therefore, the inner sealing diameter D₅ has its maximum extension.

Figure 2 shows the embodiment of figure 1 still in the first state A, wherein a pipe P was inserted into the core 2 and the nut 4. Since the gripping element 6 and the sealing 5 are both in their relaxed state and define the maximum inner diameters, the insertion of the pipe P into the connection system 1 did not require a tool or bigger manual forces.

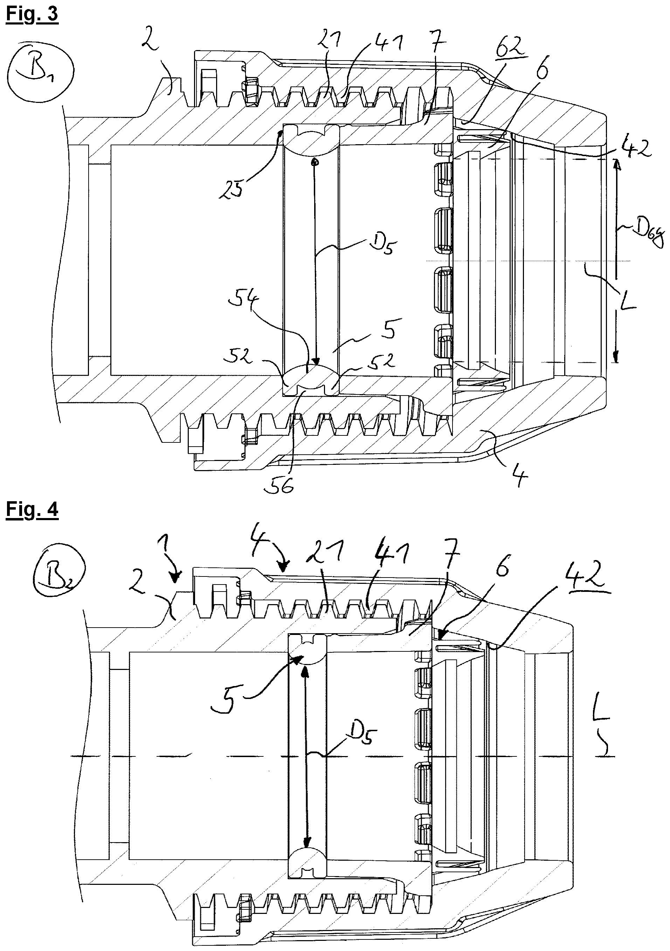

Figure 3 shows the embodiment shown in figures 1 and 2 of the connection system 1 in the second state B/B₁. The pipe P is not shown for the sake of clarity. To reach the shown second state B/B₁, the nut 4 was rotated further onto the core 2, wherein the first and second holding means 21, 41 caused a longitudinal movement of the nut 4 relative to the core 2 along the longitudinal axis L due to this movement of the nut 4 relative to the core 2, the gripping element 6 engages with its outer gripping surface 62 at the compression surface 42 of the nut 4 and is compressed such that it defines an inner bore with a mean gripping diameter D_{6G}. The mean gripping diameter D_{6G} is smaller than the maximum mean insertion diameter D₆ₘₐₓ of the gripping element 6. Furthermore, the term "mean diameter" stands in the present invention for the diameter of the average extension to the inner side of in particular the teeth in case there is a gap 64, which would form an exception from the mathematically perfect circular inner geometry. Furthermore, the nut 4 exerts a force parallel to the longitudinal axis on the intermediate element 7, which itself transfers this force to the sealing 5, which is pressed by the intermediate element 7 against the sealing shoulder 25. Thereby, the two side faces 52 of the sealing 5 have a substantially full-faced contact with the sealing shoulder 25 and the intermediate element 7 and transfer the pressing forces between these two parts to a deformation section 54. The deformation section 54 is deformed such that the inner sealing diameter D₅ is reduced and the sealing 5, in particular the convex surface of the inner side of the sealing 5 touches the outer surface of the pipe P (not shown). The advantage of the present invention is that one and the same movement (rotation of the nut 4 relative to the core 2) results in the compression of the gripping element 6, which then holds the pipe P in place and in the same time results in the compression of the sealing 5, which then provides an optimum seal between the connection system 1, in particular, the core 2 and the pipe P.

Figure 4 shows the connection system 1 of figures 1 to 3 in another second state B₂. To reach this state B₂, the nut 4 has been further screwed onto the core 2, wherein the compression of the gripping element 6 and the compression of the seal 5 is increased. This second state B₂ is preferred when a pipe P (not shown) of a smaller outer diameter than in the state shown in figure 3 is to be connected to the connecting system 1. To achieve the optimum holding conditions by the further compressed gripping element 6 and the optimum seal condition achieved by the further compression of the sealing 5, the nut 4 was rotated about another for instance 90° relative to the core 2 compared to the state shown in figure 3. Accordingly, the connection system 1 allows the fastening and sealing of pipes of different outer diameters with only a defined further rotation about an angle of for instance between 20° to 90°.

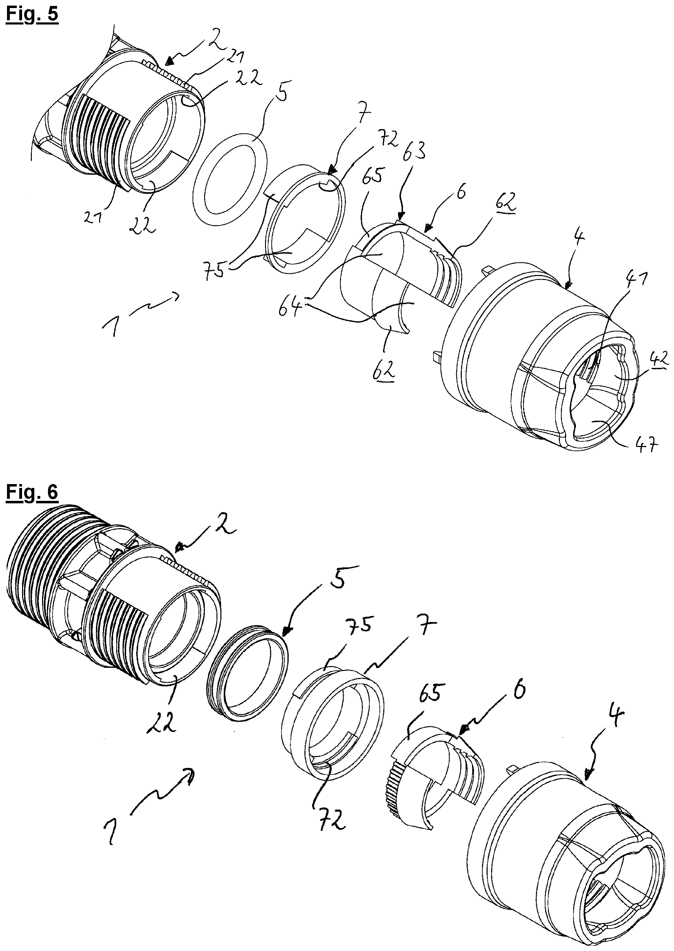

Figure 5 shows an explosion view of another preferred embodiment of the invention. As described in the embodiments before, a core 2, a nut 4, a sealing 5 and intermediate element 7 and a gripping element 6 are arranged and adapted to fasten and seal a pipe (not shown) at the connection system 1. The first holding means 21 and the second holding means 41 (shown only partly) do not extend over the full circumference of the respective part around the longitudinal axis (not shown), but extend only about a circular arc of less than 90°. Between the two portions of first holding means 21 and second holding means 41, the outer surface of the core 2 and the inner surface of the nut 4 do not comprise any protrusions. It is therefore possible to axially move the nut 4 relative to the core 2 along the longitudinal axis L without rotating movements in case the second holding means 41 are placed in line with the outer surface of the core 2 between the first holding means 21. When the correct axial position of the nut 4 relative to the core 2 is reached, a rotation of the nut about 90° relative to the core, brings the first and the second holding means 21, 41 into engagement with each other and secure the nut 4 in this axial position relative to the core 2. Furthermore, the gripping element 6 comprises a ring-shaped section 63 from which two protrusions extend which comprise the outer gripping surfaces 62. Preferably, as for the embodiment described before, the gripping element 6 comprises teeth at the inner side of the protrusions to hold and grip a pipe in the second state B of the connection system 1. When inserted into the core 2, the gripping element 6 is secured against rotation relative to the intermediate element 7, which itself is secured against rotation relative to the core 2. Preferably, the core 2 comprises a supporting recess 22 in which a respective intermediate protrusion 75 of the intermediate element 7 engages. The intermediate element 7 has a further corresponding protrusion 72 with which the securing recess 65 of the gripping element 6 engages. Thus, the gripping element 6 is secured against rotation relative to the core 2 and is also secured against displacement (leftwards in figure 5) parallel to the longitudinal axis L in one direction relative to the core 2. The intermediate element 7 eases the assembly of the connection system 1 shown in figure 5, since it not only supports the gripping element 6, but it also holds the sealing 5 in its position inside the core 2. The nut 4 comprises at its inner side two compression surfaces 42 and two inserting surfaces 47, which function will be described below.

Figure 6 shows another explosion view of another preferred embodiment of the present invention, wherein the connection system 1 of figure 6 is almost similar to the connection system 1 shown in figure 5. As one particular difference to figure 5, the sealing 5 is not only a ring-shaped gasket as shown in figure 5, but comprises two plain side faces 52 and the deformation section 54 as explained for the embodiment of figures 1 - 4. This preferred embodiment of the sealing 5 is advantageously used in variants of the present invention, where the sealing 5 is compressed with a compression force in a parallel direction to the longitudinal axis. Furthermore, the intermediate element 7 shown in figure 6 serves not only to secure the gripping element 6 against rotation and longitudinal movements relative to the core 2, but also transfers the compression force exerted by the nut 4 along the longitudinal axis L and compresses the sealing 5 in the manner described for figures 3 and 4. Furthermore, the intermediate element 7 comprises an intermediate protrusion 75 engaging the supporting recess 22 at the inner side of the core 2. Furthermore, the intermediate element has a corresponding recess 72 in which the securing protrusion 65 of the gripping element 6 engages. In an alternatively preferred embodiment wherein the intermediate element 7 is missing, the securing protrusion 65 gripping element 6 shown in figure 6 could directly engage the securing recess 22 at the core. Furthermore, in this embodiment the sealing 5 is compressed directly by the gripping element 6.

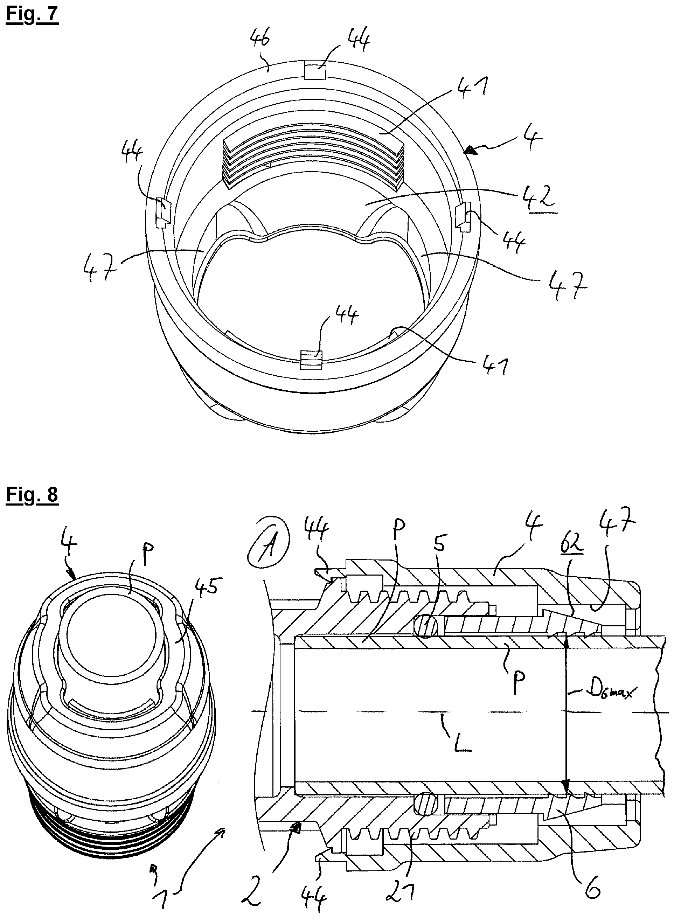

Figure 7 shows a perspective view on the inner side of the nut 4 of the embodiment of figures 5 and 6. As shown, the inner side of the nut comprises two sections of second holding means 41, which do not extend over the full circumference of the inner side of the nut 4, but only about an angle of 70° to 85°. This eases the insertion of the core 2 into the nut 4 without the necessity of performing rotational movements of the nut 4 relative to the core 2. Furthermore, the nut 4 comprises two compression surfaces 42 situated right in front of the holding means 41. Adjacent to each compression surface 42 two inserting surfaces 47 are formed at the inner side of the nut 4. The compression surfaces 42 have a conically shaped form and comprise a minimum diameter, which is smaller than the inner diameter of the substantially cylindrically shaped inserting surfaces 47. In the intermediate region between the inserting surfaces 47 and the respective compression surfaces 42 a rounded geometry is arranged, which allows the sliding of the outer gripping surface 62 of the gripping element 6 to smoothly position the outer gripping surface 62 at the compression surface 42. Furthermore, the nut 4 at its rear rim 46 comprises four nut locking protrusions 44, which are in the present embodiment preferably hook-shaped. The nut locking protrusions 44 allow the easy securing of the nut in a certain longitudinal position relative to the core by clicking the hook-shaped locking protrusions 44 over a corresponding geometry at the core 2 (see figure 8). Furthermore, the locking protrusion 44 may also secure a certain rotational position of the nut 4 relative to the core 2, when at least one locking protrusion 44 is brought into engagement with a corresponding protrusion 24 formed at the core 2.

Figure 8 shows two views, one perspective view and one cross-sectional view, on the connection system 1 of figures 5 to 7 in the first state A. The pipe P is already inserted into the connection system 1, while the nut 4 has already been put over the core 2, whereby the nut locking means 44 engaged at an outer rim of the core to secure the nut against displacement rightwards relative to the core (in the cross-sectional view). Furthermore, the nut 4 is in a rotary position, where the outer gripping surface 62 is not in contact with the compression surface 42 of the nut (not shown), but is in a spaced condition relative to the inserting surfaces 47 at the inner side of the nut 4. In this state, the gripping element 6 has at its inner side the maximum mean insertion diameter D₆ₘₐₓ, which allows the easy inserting of the pipe P into the gripping element 6 and the rest of the connection system 1. Furthermore, the perspective view of figure 8 shows the special shape of the opening formed at the front rim 45 of the nut 4. The wider sections of this openings on the upper and lower side of the nut in this perspective view serves to reduce the weight of the nut 4 and safe costs for material. Furthermore it signals the user the respective rotary position of the nut 4, since the front face of the gripping element 6 is visible through this broader sections of the opening formed at the front rim 45 of the nut 4.

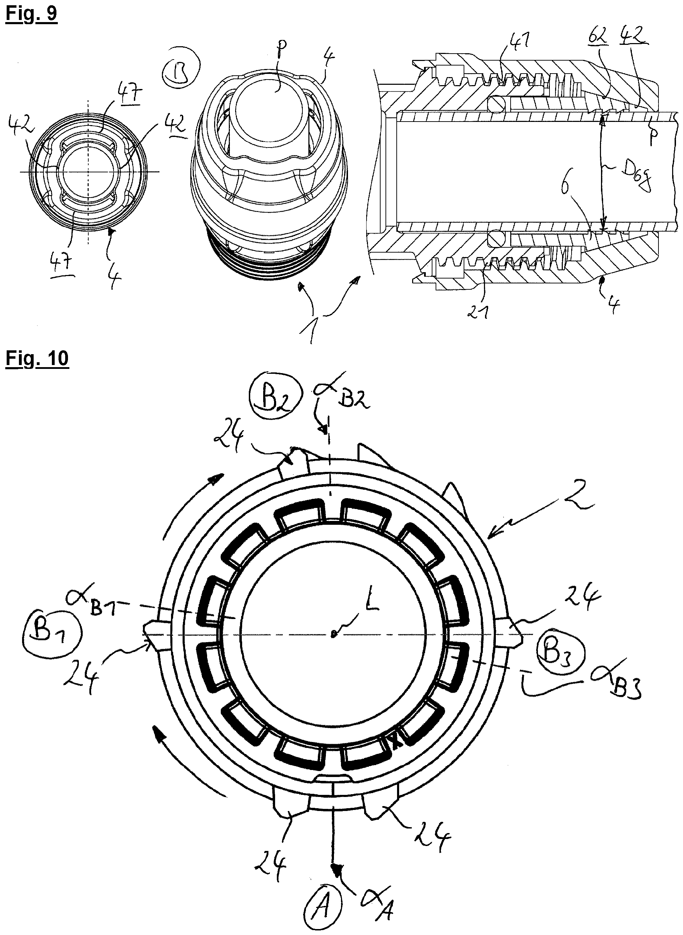

Figure 9 shows the connection system 1 of figure 8 in the second state B, wherein in contrast to the first state A shown in figure 8, the first holding means 21 are in engagement with the second holding means 41. Furthermore, the gripping element 6 is compressed at its outer gripping surface 62 by the compression surface 42 at the inner side of the nut 4. Thereby, the inner diameter of the gripping element 6 is reduced to the mean gripping diameter D_{6G}, which makes the teeth form at the inner side of the gripping element 6 engage at the outer surface of the pipe and, in particular, dig in the material of the outer surface of the pipe P, the gripping element 6 is secured against translational movement parallel to the longitudinal axis via an intermediate element (not shown) or when it gets in supporting contact with the sealing 5.

Figure 10 shows a view along the longitudinal axis L on a preferred embodiment of the core 2. Shown are preferably five core locking protrusions 24 that are distributed along the outer circumference of the core 2. These core locking protrusions 24 serve to secure the nut 4 (not shown) in certain rotary positions relative to the core 2, wherein each of these rotary positions stands for a certain first state A or second state B, B₁, B₂, B₃. On the lower side of the core 2 in figure 10, two core locking protrusions 24 are arranged in close proximity to each other. Between these two core locking protrusions 24 a first state angle α_{A} is defined. In this rotary position, the nut 4 is preferably situated at the core in the position shown in figures 1 and 2. Furthermore, the rotary position at the first state angle α_{A} is regarded as zero position. When rotating the nut 4 relative to the core 2 in the direction shown by the arrows, the nut locking protrusion 44 (not shown) will pass by the next core locking protrusion 24 shown at the left side of the core 2. By overcoming the holding force exerted from the core locking protrusion 24 on the nut locking protrusion 44 and due to elastic deformation of at least one of the two protrusions 24, 44, the user can bring the nut 4 into the first shown second state B₁, wherein the nut 4 has been rotated relative to the core about a second state angle α_{B1}. The nut 4 is thereby secured from rotating backwards by the positive fit and engagement of the nut locking protrusion 44 and the core locking protrusion 24. Further rotation of the nut 4 as indicated by the arrow on the outer side of the core 2 brings the nut 4 to a second second state B₂ or further to a third second state B₃. Each of the second states B₁, B₂, B₃ stands for a certain outer diameter of a pipe P (not shown), which can be held and sealed by the connection system 1. The first second state B, thereby stands for the pipe with the largest outer diameter and the third second state B₃ stands for the pipe with the smallest outer diameter.

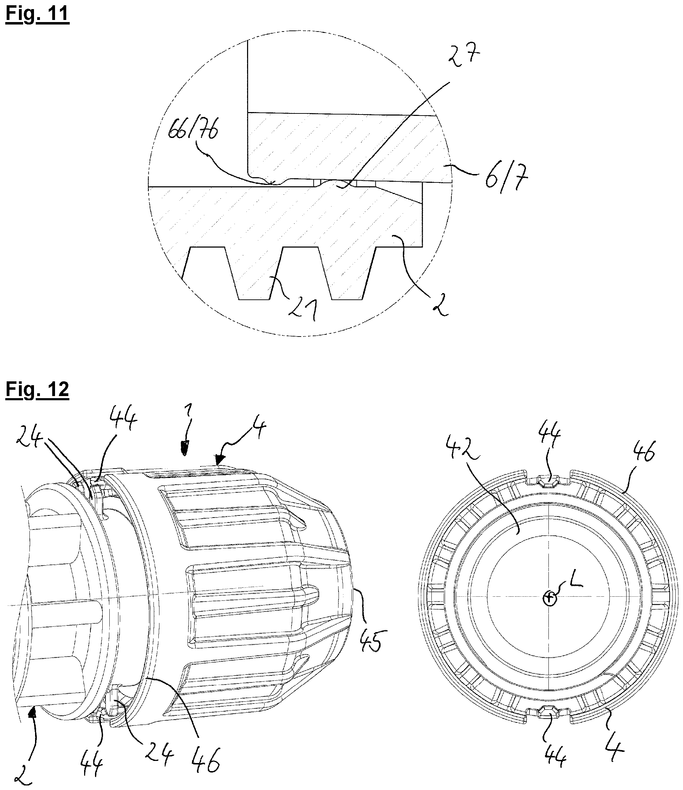

Figure 11 shows a detailed view on a cross-section of the interaction area between the core 2 and either the gripping element 6 or the intermediate element 7. Preferably, the core 2 at its inner side comprises a rounded holding protrusion 27, wherein the gripping element 6 comprises a corresponding holding protrusion 66 or the intermediate element 7 comprises a corresponding holding protrusion 76 at its outer side. The holding protrusions 27, 66, 76 serve to ease the assembly of the connection system 1, because the intermediate element 7 or gripping element 6 can be inserted into the inner bore of the core 2 with manual force overcoming the resistance of the positive fit of the holding protrusions 27 and 66, 76, wherein the intermediate element 7 or gripping element 6 is secured from falling of the core 2 in the further process of assembling the connection system 1.

Figure 12 shows a perspective view on a preferred embodiment of the connection system 1 according to the invention, when the core 2 comprises four core locking protrusions 24 on the opposite sides of the outer surface of the core 2. The nut 4 comprises two nut locking protrusions 44 situated at opposite sides at the rear rim 46 of the nut 4. It is to be understood that in this embodiment the nut 4 and the core 2 may be brought in a rotationally secured state, each 180° of rotation of the nut 4 relative to the core 2. The nut locking protrusions 44 are preferably formed as spring like extensions at the outer side of the nut 4.

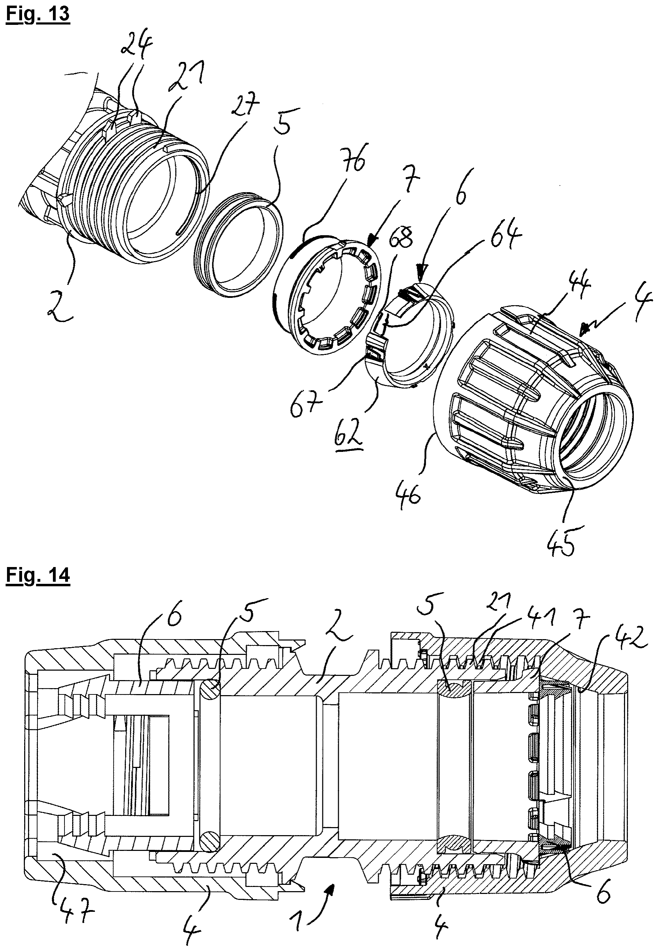

Figure 13 shows an exploded view of another preferred embodiment of the present invention. Thereby, the core 2 shows holding protrusions 27 at its inner side as described above. Furthermore, core locking protrusions 24 are distributed at the outer circumference of the core 2 as described before and shown in particular in figure 10. The intermediate element 7 comprises corresponding holding protrusions 76 at its outer surface, which allow the easy insertion and holding of the intermediate element 7 and the sealing 5 inside the bore of the core 2 when assembling the connection system 1. The gripping element 6 is substantially ring-shaped and comprises a gripping gap 64. To bridge the gripping gap 64 and ease the aligning of the gripping element 6 inside the nut 4, a bridging protrusion 68 is formed at the gripping element 6 and extends along the circumferential direction to guide the gripping element 6 inside the respective holding geometry of the nut 4 and allow the compression and reducing of the gripping gap 64. Furthermore, the gripping element 6 preferably comprises spring elements 67 at its outer surface, which eases the aligning of the gripping element 6 inside the nut 4 and prevents the gripping element 6 from tilting to an unwanted position inside the nut 4. The spring elements 67 are arranged between several outer gripping surfaces 62, which are distributed on the outer circumference of the gripping element 6. The nut 4 comprises nut locking protrusions 44, which extend in the radial and axial direction at the rear rim 46 of the nut 4. To increase the ability for deflection, the nut locking protrusions 44 originate from the middle section of the nut and not directly from the rear rim 46. It is to be understood that, in particular, the feature of the holding protrusions 27, 66 und 76 and the feature of the bridging protrusion 68 and the spring elements 67 at the gripping element 6 as well as the form of the nut locking protrusions 44 may be utilized in all the embodiments shown in figures 1 to 12.

Figure 14 shows a preferred embodiment of the connection system 1 according to the invention, adapted to fasten and seal two pipes P. The core 2 is adapted to engage with a nut 4 on either side, wherein the right side of the connection system 1 corresponds to the embodiments shown in Figures 1 - 4 and the left side of the connection system utilizes the features of the embodiments shown in figures 5 - 9. Of course it would also form a preferred embodiment of the present invention when two identical nuts 4 and corresponding gripping elements 6 and/or intermediate elements 7 and/or sealings 5 are utilized at both sides of a single core 2.

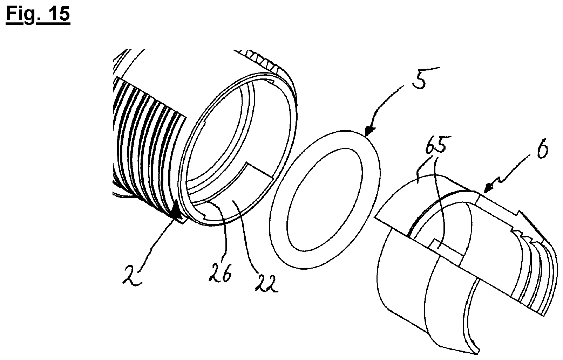

Fig. 15 shows a preferred embodiment of the connection system, wherein the gripping element 6 is supported directly at the core 2. The core 2 comprises a gripping shoulder 26, which is formed of material of the core 2 and in the present embodiment is arranged at the supporting recess 22. The gripping element 6 gets in contact with the gripping shoulder 26 preferably with the securing protrusions 65 formed as one-piece with the gripping element 6. The direct contact of the gripping element 6 with a gripping shoulder 26 formed at the core 2 may advantageously be utilized also in modified variants of the embodiments shown in figures 5 or 6, when the intermediate element 7 is left away.

### Reference numerals:

| | | | |
|---|---|---|---|
| 1 - | connection system | 62 - | outer gripping surface |
| 2 - | core | 63 - | ring-shaped section |
| 4 - | nut | 64 - | gripping gap |
| 5 - | sealing | 65 - | securing protrusion/recess |
| 6 - | gripping element | 66 - | holding protrusions |
| 7 - | intermediate element | 67 - | spring element |
| 21 - | first holding means | 68 - | bridging protrusion |
| 22 - | supporting protrusion/recess | 72 - | corresponding protrusion/recess |
| 24 - | core locking protrusion | 75 - | intermediate recess |
| 25 - | sealing shoulder | 76 - | holding protrusion |
| 26 - | gripping shoulder | α_{A} - | first state angle |
| 41 - | second holding means | α_{B1...3} - | second state angle |
| 42 - | compression surface | A - | first state |
| 44 - | nut locking protrusion | B, B_{1...3} - | second state |
| 45 - | front rim | D₅ - | inner sealing diameter |
| 46 - | rear rim | D₆ₘₐₓ - | maximum mean insertion diameter |
| 47 - | inserting surface | D_{6G} - | mean gripping diameter |
| 52 - | side faces | L - | longitudinal axis |
| 54 - | deformation section | P - | pipe |

## Claims

1. Connection system (1) for pipes,
comprising a core (2) and a nut (4),
wherein the core (2) comprises an at least partially cylindrical bore that extends axially symmetrically along a longitudinal axis (L),
wherein the nut (4) comprises a front rim (45) with a bore adapted to insert a pipe (P) and a rear rim (46) with a bore adapted to insert the core (2),
wherein a sealing (5) and a gripping element (6) are arranged in an inner space defined by the core (2) and the nut (2),
wherein in a first state (A) of the connection system (1)
- the core (2) and the nut (4) are moveable relative to each other parallel to the longitudinal axis (L), and
- the gripping element (6) in its relaxed state defines an inner bore with a maximum mean insertion diameter (D₆ₘₐₓ);
wherein in a second state (B, B₁, B₂, B₃) of the connection system (1)
- first holding means (21) formed at the core (2) are in engagement with second holding means (41) formed at the nut (4), to secure the core (2) and the nut (4) against displacement relative to each other,
- the gripping element (6) is supported by a compression surface (42) of the nut (4) holding the gripping element (6) in a compressed state in which the inner bore of the gripping element (6) is reduced to a mean gripping diameter (D_{6G}),
- wherein the nut (4) is adapted to exert a force acting parallel to the longitudinal axis (L) that presses the gripping element (6) against at least one of the sealing (5), an intermediate element (7), and a gripping shoulder (26) formed at the inner side of the core (2)
wherein the nut (4) comprises at least one nut locking protrusion (44) extending parallel to the longitudinal axis (L) and radially inwardly from the rear rim (46) of the nut (4) and the core (2) comprises at least one core locking protrusion (24) extending radially outwardly from the core (2),
wherein in the first state (A) and/or in the second state (B, B₁, B₂, B₃) of the connection system (1) the core locking protrusion (24) and the nut locking protrusion (44) engage with each other to prevent rotational movements of the nut (4) relative to the core (2) in one rotational direction.

2. Connection system (1) according to claim 1,
wherein the first holding means (21) and the second holding means (41) comprise at least one protrusions at the inner side of the nut (4) and the outer side of the core (2),
wherein each protrusion extends mainly along a circumferential circular arc of a circle around the longitudinal axis (L).

3. Connection system (1) according to one of the preceding claims,
wherein the compression surface (42) of the nut (4) and a corresponding outer gripping surface (62) formed at the gripping element (6) are formed conically.

4. Connection system (1) according to one of the preceding claims,
wherein the gripping element (6) comprises a mainly ring-shaped section (63) and comprises at least one gripping gap (64) that extends in the circumferential direction and interrupts the outer gripping surface (62).

5. Connection system (1) according to claim 1, 3 or 4,
wherein the first holding means (21) and the second holding means (41) are threads adapted to screw the nut (4) onto the core (2).

6. Connection system (1) according to one of the preceding claims,
wherein in the second state (B, B₁, B₂, B₃) the nut (4) is adapted to exert a force acting parallel to the longitudinal axis (L) that presses the gripping element (6) and/or the intermediate element (7) against the sealing (5),
wherein the sealing (5) is supported by a sealing shoulder (25) formed at the inner side of the core (2) which holds the sealing (5) against the pressing force exerted by the nut (4),
wherein the sealing (5) is deformed such that an inner sealing diameter (D₅) is reduced.

7. Connection system (1) according one of the preceding claims,
wherein the core (2) comprises a plurality of core locking protrusions (24) that are distributed along the outer circumference of the core (2),
wherein rotation of the nut (4) relative to the core (2) about the longitudinal axis (L) starting from a zero position at a first state angle (α_{A}) about a second state angle (α_{B1}, α_{B2}, α_{B3}) results in one of a plurality of second states (B, B₁, B₂, B₃) of the connection system (1),
wherein each nut locking protrusion (44) engages with one core locking protrusion (24) to hold the connection system in one of the second states (B, B₁, B₂, B₃).

8. Connection system (1) according to one of the preceding claims,
wherein the sealing (5) is ring-shaped and comprises two substantially plain side faces (52) and a deformation section (54) arranged between the side faces (52), wherein the deformation section (54) has a convex side facing towards the inner side of the sealing (5).

9. Connection system (1) according claim 8,
wherein the deformation section (54) of the sealing (5) comprises a deformation recess (56) facing towards the outer side of the sealing (5).

10. Connection system (1) according to one of claims 1 to 4,
wherein the first holding means (21) and the second holding means (41) extend along circumferential circular arcs with an arc angle of less than or equal 90°, wherein two first holding means (21) and two second holding means (41) are arranged at opposing sides of each of the core (2) and the nut (4),
wherein each space between the holding means (21, 41) is free of protrusions.

11. Connection system (1) according to one of claims 1 to 4 or 10,
wherein the nut (4) comprises two compression surfaces (42) arranged opposing each other at the inner side of the nut (4),
wherein the nut (4) comprises inserting surfaces (47) arranged at the inner side of the nut (4) between the compression surfaces (42),
wherein the inserting surfaces extend substantially cylindrically along the longitudinal axis (L),
wherein the minimum distance between the compression surfaces (42) is smaller than the minimum distance between the inserting surfaces (47).

12. Connection system (1) according to claim 11,
wherein the minimum distance between the compression surfaces (42) is between 0.4- to 0.9-times, preferably between 0.5- to 0.8-times and in particular preferably between 0.6- to 0.8-times the minimum distance between the inserting surfaces (47).

13. Connection system (1) according to one of the preceding claims,
wherein the gripping element (6) comprises at least one securing protrusion or securing recess (65) which can be brought in direct or indirect engagement with a supporting protrusion or supporting recess (22) formed at the inner side of the core (2) to prevent rotation of the gripping element (6) relative to the core (2),
wherein the supporting protrusion/recess (22) preferably comprises the gripping shoulder (26).

14. Connection system (1) according to claim 13,
wherein the securing protrusion or securing recess (65) engages at a corresponding recess or protrusion (72) formed at an intermediate element (7),
wherein the intermediate element (7) comprises an intermediate protrusion or intermediate recess (75) which can be brought in direct engagement with the supporting protrusion or supporting recess (22).

## Patentansprüche

1. Verbindungssystem (1) für Rohre,
mit einem Kern (2) und einer Mutter (4),
wobei der Kern (2) eine zumindest teilweise zylindrische Bohrung aufweist, die sich axialsymmetrisch entlang einer Längsachse (L) erstreckt,
wobei die Mutter (4) einen vorderen Rand (45) mit einer Bohrung zum Einsetzen eines Rohres (P) und einen hinteren Rand (46) mit einer Bohrung zum Einsetzen des Kerns (2) aufweist,
wobei eine Dichtung (5) und ein Greifelement (6) in einem durch die Mutter (2) und den Kern (2) definierten Innenraum angeordnet sind,
wobei in einem ersten Zustand (A) des Verbindungssystems (1)
- der Kern (2) und die Mutter (4) parallel zur Längsachse (L) relativ zueinander bewegbar sind, und
- das Greifelement (6) in seinem entspannten Zustand eine innere Bohrung mit einem maximalen mittleren Einsteckdurchmesser (D6max) definiert;
wobei in einem zweiten Zustand (B, B1, B2, B3) des Verbindungssystems (1)
- eine am Kern (2) ausgebildete erste Haltevorrichtung (21) mit einer an der Mutter (4) ausgebildeten zweiten Haltevorrichtung (41) in Eingriff steht, um den Kern (2) und die Mutter (4) gegen Verschiebung relativ zueinander zu sichern,
- das Greifelement (6) von einer Kompressionsoberfläche (42) der Mutter (4) getragen wird, die das Greifelement (6) in einem komprimierten Zustand hält, in dem die innere Bohrung des Greifelements (6) auf einen mittleren Greifdurchmesser (D6G) reduziert ist,
- wobei die Mutter (4) geeignet ist, eine parallel zur Längsachse (L) wirkende Kraft auszuüben, die das Greifelement (6) gegen mindestens eine der Dichtungen (5), ein Zwischenelement (7) und eine an der Innenseite des Kerns (2) ausgebildete Greifschulter (26) drückt
wobei die Mutter (4) mindestens einen Mutter-Sicherungsvorsprung (44) aufweist, der sich parallel zur Längsachse (L) und vom hinteren Rand (46) der Mutter (4) radial nach innen erstreckt, und der Kern (2) mindestens einen Kern-Sicherungsvorsprung (24) aufweist, der sich vom Kern (2) radial nach außen erstreckt,
wobei im ersten Zustand (A) und/oder im zweiten Zustand (B, B1, B2, B3) des Verbindungssystems (1) der Kern-Sicherungsvorsprung (24) und der Mutter-Sicherungsvorsprung (44) ineinander eingreifen, um Drehbewegungen der Mutter (4) relativ zum Kern (2) in einer Drehrichtung zu verhindern.

2. Verbindungssystem (1) nach Anspruch 1,
wobei die erste Haltevorrichtung (21) und die zweite Haltevorrichtung (41) mindestens einen Vorsprung an der Innenseite der Mutter (4) und an der Außenseite des Kerns (2) aufweisen,
wobei sich jeder Vorsprung hauptsächlich entlang eines umlaufenden Kreisbogens eines Kreises um die Längsachse (L) erstreckt.

3. Verbindungssystem (1) nach einem der vorhergehenden Ansprüche,
wobei die Kompressionsoberfläche (42) der Mutter (4) und eine entsprechende am Greifelement (6) ausgebildete äußere Greifoberfläche (62) konisch ausgebildet sind.

4. Verbindungssystem (1) nach einem der vorhergehenden Ansprüche,
wobei das Greifelement (6) einen im Wesentlichen ringförmigen Bereich (63) aufweist und mindestens einen sich in der Umfangsrichtung erstreckenden und die äußere Greifoberfläche (62) unterbrechenden Greifspalt (64) aufweist.

5. Verbindungssystem (1) nach Anspruch 1, 3 oder 4,
wobei die erste Haltevorrichtung (21) und die zweite Haltevorrichtung (41) Gewinde sind, die zum Aufschrauben der Mutter (4) auf den Kern (2) geeignet sind.

6. Verbindungssystem (1) nach einem der vorhergehenden Ansprüche,
wobei im zweiten Zustand (B, B1, B2, B3) die Mutter (4) dazu eingerichtet ist, eine parallel zur Längsachse (L) wirkende Kraft auszuüben, die das Greifelement (6) und/oder das Zwischenelement (7) gegen die Dichtung (5) drückt, wobei die Dichtung (5) durch eine an der Innenseite des Kerns (2) ausgebildete Dichtungsschulter (25) abgestützt ist, die die Dichtung (5) gegen die von der Mutter (4) ausgeübte Druckkraft hält,
wobei die Dichtung (5) derart verformt wird, dass ein innerer Dichtungsdurchmesser (D5) verringert wird.

7. Verbindungssystem (1) nach einem der vorhergehenden Ansprüche,
wobei der Kern (2) eine Vielzahl von Kern-Sicherungsvorsprüngen (24) aufweist, die entlang des Außenumfangs des Kerns (2) verteilt sind,
wobei eine Drehung der Mutter (4) relativ zum Kern (2) um die Längsachse (L) ausgehend von einer Nullstellung in einem ersten Zustandswinkel (α_{A}) um einen zweiten Zustandswinkel (α_{B1}, α_{B2}, α_{B3}) zu einem von einer Vielzahl von zweiten Zuständen (B, B1, B2, B3) des Verbindungssystems (1) führt,
wobei jeder Mutter-Sicherungsvorsprung (44) mit einem Kern-Sicherungsvorsprung (24) in Eingriff steht, um das Verbindungssystem in einem der zweiten Zustände (B, B1, B2, B3) zu halten.

8. Verbindungssystem (1) nach einem der vorhergehenden Ansprüche,
wobei die Dichtung (5) ringförmig ist und zwei im Wesentlichen ebene Seitenflächen (52) und einen zwischen den Seitenflächen (52) angeordneten Verformungsbereich (54) aufweist,
wobei der Verformungsbereich (54) eine der Innenseite der Dichtung (5) zugewandte konvexe Seite aufweist.

9. Verbindungssystem (1) nach Anspruch 8,
wobei der Verformungsbereich (54) der Dichtung (5) eine der Außenseite der Dichtung (5) zugewandte Verformungsaussparung (56) aufweist.

10. Verbindungssystem (1) nach einem der Ansprüche 1 bis 4,
wobei sich die ersten Haltevorrichtung (21) und die zweiten Haltevorrichtung (41) entlang umlaufender Kreisbögen mit einem Bogenwinkel von kleiner oder gleich 90° erstrecken,
wobei jeweils zwei erste Haltevorrichtungen (21) und zwei zweite Haltevorrichtungen (41) an gegenüberliegenden Seiten des Kerns (2) und der Mutter (4) angeordnet sind,
wobei jeder Raum zwischen den Haltevorrichtungen (21, 41) frei von Vorsprüngen ist.

11. Verbindungssystem (1) nach einem der Ansprüche 1 bis 4 oder 10,
wobei die Mutter (4) zwei Kompressionsoberflächen (42) aufweist, die an der Innenseite der Mutter (4) einander gegenüberliegend angeordnet sind,
wobei die Mutter (4) an der Innenseite der Mutter (4) zwischen den Kompressionsoberflächen (42) angeordnete Einsteckflächen (47) aufweist,
wobei sich die Einsteckflächen im Wesentlichen zylindrisch entlang der Längsachse (L) erstrecken,
wobei der Mindestabstand zwischen den Kompressionsoberflächen (42) kleiner ist als der Mindestabstand zwischen den Einsteckflächen (47).

12. Verbindungssystem (1) nach Anspruch 11,
wobei der Mindestabstand zwischen den Kompressionsoberflächen (42) zwischen dem 0,4- bis 0,9-fachen, bevorzugt zwischen dem 0,5- bis 0,8-fachen und besonders bevorzugt zwischen dem 0,6- bis 0,8-fachen des Mindestabstandes zwischen den Einsteckflächen (47) liegt.

13. Verbindungssystem (1) nach einem der vorhergehenden Ansprüche,
wobei das Greifelement (6) mindestens einen Sicherungsvorsprung bzw. eine Sicherungsaussparung (65) aufweist, der bzw. die mit einem an der Innenseite des Kerns (2) ausgebildeten Stützvorsprung bzw. einer Stützaussparung (22) in direkten oder indirekten Eingriff gebracht werden kann, um eine Drehung des Greifelements (6) relativ zum Kern (2) zu verhindern,
wobei der Stützvorsprung/die Stützaussparung (22) vorzugsweise die Greifschulter (26) umfasst.

14. Verbindungssystem (1) nach Anspruch 13,
wobei der Sicherungsvorsprung oder die Sicherungsaussparung (65) in eine entsprechende Aussparung oder einen Vorsprung (72) eingreift, die bzw. der an einem Zwischenelement (7) ausgebildet ist,
wobei das Zwischenelement (7) einen Zwischenvorsprung oder eine Zwischenaussparung (75) aufweist, der/die mit dem Stützvorsprung oder der Stützaussparung (22) in direkten Eingriff gebracht werden kann.

## Revendications

1. Système de connexion (1) pour tuyaux,
comprenant un noyau (2) et un écrou (4),
dans lequel
le noyau (2) présente un alésage au moins partiellement cylindrique qui s'étend axialement de façon symétrique le long d'un axe longitudinal (L), l'écrou (4) présente un bord avant (45) avec un alésage adapté à l'insertion d'un tuyau (P) et un bord arrière (46) avec un alésage adapté à l'insertion du noyau (2),
un joint d'étanchéité (5) et un élément de serrage (6) sont disposés dans un espace intérieur défini par le noyau (2) et par l'écrou (2),
dans un premier état (A) du système de connexion (1),
- le noyau (2) et l'écrou (4) sont mobiles l'un par rapport à l'autre parallèlement à l'axe longitudinal (L), et
- l'élément de serrage (6,) à l'état desserré, définit un alésage intérieur avec un diamètre d'insertion moyen maximal (D₆ₘₐₓ) ;
dans un deuxième état (B, B₁, B₂, B₃) du système de connexion (1),
- des premiers moyens de maintien (21) formés sur le noyau (2) sont en engagement avec des deuxièmes moyens de maintien (41) formés sur l'écrou (4), afin de bloquer le noyau (2) et l'écrou (4) à l'encontre d'un déplacement l'un par rapport à l'autre,
- l'élément de serrage (6) est supporté par une surface de compression (42) de l'écrou (4), qui maintient l'élément de serrage (6) dans un état comprimé dans lequel l'alésage intérieur de l'élément de serrage (6) est réduit à un diamètre de serrage moyen (D_{6G}),
- l'écrou (4) est adapté pour exercer une force agissant parallèlement à l'axe longitudinal (L), qui presse l'élément de serrage (6) contre au moins un élément parmi le joint d'étanchéité (5), un élément intermédiaire (7) et un épaulement de serrage (26), formé sur la face intérieure du noyau (2), l'écrou (4) comprend au moins une saillie de verrouillage d'écrou (44) s'étendant parallèlement à l'axe longitudinal (L) et radialement vers l'intérieur à partir du bord arrière (46) de l'écrou (4), et le noyau (2) comprend au moins une saillie de verrouillage de noyau (24) s'étendant radialement vers l'extérieur à partir du noyau (2),
dans le premier état (A) et/ou dans le deuxième état (B, B₁, B₂, B₃) du système de connexion (1), la saillie de verrouillage de noyau (24) et la saillie de verrouillage d'écrou (44) s'engagent l'une dans l'autre pour empêcher les mouvements de rotation de l'écrou (4) par rapport au noyau (2) dans un sens de rotation.

2. Système de connexion (1) selon la revendication 1,
dans lequel le premier moyen de maintien (21) et le deuxième moyen de maintien (41) présentent au moins une saillie sur la face intérieure de l'écrou (4) et sur la face extérieure du noyau (2),
chaque saillie s'étend principalement le long d'un arc de cercle circonférentiel autour de l'axe longitudinal (L).

3. Système de connexion (1) selon l'une des revendications précédentes, dans lequel la surface de compression (42) de l'écrou (4) et une surface de serrage extérieure correspondante (62) formée sur l'élément de serrage (6) sont de forme conique.

4. Système de connexion (1) selon l'une des revendications précédentes, dans lequel l'élément de serrage (6) comprend une section principalement en forme d'anneau (63) et comprend au moins une fente de serrage (64) qui s'étend dans la direction circonférentielle et interrompt la surface de serrage extérieure (62).

5. Système de connexion (1) selon la revendication 1, 3 ou 4,
dans lequel le premier moyen de maintien (21) et le deuxième moyen de maintien (41) sont des filets adaptés pour visser l'écrou (4) sur le noyau (2).

6. Système de connexion (1) selon l'une des revendications précédentes,
dans lequel, dans le deuxième état (B, B₁, B₂, B₃), l'écrou (4) est adapté pour exercer une force agissant parallèlement à l'axe longitudinal (L), qui presse l'élément de serrage (6) et/ou l'élément intermédiaire (7) contre le joint d'étanchéité (5),
le joint d'étanchéité (5) est supporté par un épaulement d'étanchéité (25) formé sur la face intérieure du noyau (2), qui maintient le joint d'étanchéité (5) à l'encontre de la force de pression exercée par l'écrou (4),
le joint d'étanchéité (5) est déformé de manière à réduire le diamètre intérieur (D₅) du joint d'étanchéité.

7. Système de connexion (1) selon l'une des revendications précédentes,
dans lequel le noyau (2) comprend une pluralité de saillies de verrouillage de noyau (24) qui sont réparties le long de la circonférence extérieure du noyau (2),
la rotation de l'écrou (4) par rapport au noyau (2) autour de l'axe longitudinal (L) à partir d'une position zéro, à un premier angle d'état (α_{A}), d'un deuxième angle d'état (α_{B1}, α_{B2}, α_{B3}) entraîne l'un parmi plusieurs deuxièmes états (B, B₁, B₂, B₃) du système de connexion (1),
chaque saillie de verrouillage d'écrou (44) s'engage avec une saillie de verrouillage de noyau (24) pour maintenir le système de connexion dans l'un des deuxièmes états (B, B₁, B₂, B₃).

8. Système de connexion (1) selon l'une des revendications précédentes,
dans lequel le joint d'étanchéité (5) est en forme d'anneau et présente deux faces latérales sensiblement plates (52) et une section de déformation (54) disposée entre les faces latérales (52),
la section de déformation (54) présente une face convexe orientée vers la face intérieure du joint d'étanchéité (5).

9. Système de connexion (1) selon la revendication 8,
dans lequel la section de déformation (54) du joint d'étanchéité (5) présente une cavité de déformation (56) orientée vers la face extérieure du joint d'étanchéité (5).

10. Système de connexion (1) selon l'une des revendications 1 à 4,
dans lequel le premier moyen de maintien (21) et le deuxième moyen de maintien (41) s'étendent le long d'arcs de cercle circonférentiels avec un angle d'arc inférieur ou égal à 90°,
deux premiers moyens de maintien (21) et deux deuxièmes moyens de maintien (41) sont disposés sur les faces opposées du noyau (2) et de l'écrou (4),
l'espace respectif entre les moyens de maintien (21, 41) est exempt de saillies.

11. Système de connexion (1) selon l'une des revendications 1 à 4 ou 10,
dans lequel l'écrou (4) comprend deux surfaces de compression (42) disposées à l'opposé l'une de l'autre sur la face intérieure de l'écrou (4), l'écrou (4) présente des surfaces d'insertion (47) disposées sur la face intérieure de l'écrou (4) entre les surfaces de compression (42),
les surfaces d'insertion s'étendent sensiblement cylindriquement le long de l'axe longitudinal (L),
la distance minimale entre les surfaces de compression (42) est inférieure à la distance minimale entre les surfaces d'insertion (47).

12. Système de connexion (1) selon la revendication 11,
dans lequel la distance minimale entre les surfaces de compression (42) est comprise entre 0,4 et 0,9 fois, de préférence entre 0,5 et 0,8 fois et de manière particulièrement préférée entre 0,6 et 0,8 fois la distance minimale entre les surfaces d'insertion (47).

13. Système de connexion (1) selon l'une des revendications précédentes,
dans lequel l'élément de serrage (6) comprend au moins une saillie de blocage ou une cavité de blocage (65) qui peut être mise en engagement direct ou indirect avec une saillie de support ou une cavité de support (22) formé sur la face intérieure du noyau (2) pour empêcher la rotation de l'élément de serrage (6) par rapport au noyau (2),
la saillie/cavité de support (22) comprend de préférence l'épaulement de serrage (26).

14. Système de connexion (1) selon la revendication 13,
dans lequel la saillie de blocage ou la cavité de blocage (65) s'engage dans une cavité ou une saillie correspondante (72) formée sur un élément intermédiaire (7),
l'élément intermédiaire (7) comprend une saillie intermédiaire ou une cavité intermédiaire (75) qui peut être mise en engagement direct avec la saillie de support ou la cavité de support (22).
